# EUROPEAN PATENT APPLICATION

(11) **EP 3 223 498 A1**
(43) Date of publication of application: **27.09.2017**
(21) Application number: 17162059.4
(22) Date of filing: 21.03.2017
(51) Int. Cl.: H04L 29/12

(54) **METHOD AND APPARATUS FOR INTERCONNECTION BETWEEN NETWORKS**

(30) Priority: 21.03.2016 EP 16305305
(71) Applicant: Thomson Licensing, 92130 Issy-les-Moulineaux (FR)
(72) Inventor: ONNO, Stéphane, 35576 Cesson-Sévigné (FR); NEUMANN, Christoph, 35576 Cesson-Sévigné (FR)
(74) Representative: Huchet, Anne

(57) **Abstract**

Methods and apparatus for controlling the communication between a first network and a second network. The method comprises: creating a data path between the first network and the second network; building a translation table which translate a local legacy address of a device in the first network to a local virtual address of a device in the second network; and transmitting a flow rule created based on the translation table to the Network Address Translation (NAT) function of the created data path between the first network and the second network.

## Description

### FIELD OF THE INVENTION

The present disclosure relates to networking, and in particular to a method and an apparatus for interconnection between networks.

### BACKGROUND OF THE INVENTION

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

Interconnection of networks may comprise providing transparent access of a device between at least two networks. For example, a device of a network A can communicate with a network B using local IP(Internet Protocol) addressing and MAC(Media Access Control) layer protocols, and vice versa, although other communications can be provided because ideally a user should experience a seamless connection from network A to network B.

Motivation of interconnecting two or more networks will be explained, taking a private home network for example. The interconnection of private home networks can make members of family, friends or acquaintances which connect, for instance, different DSL (Digital Subscriber Line) or mobile networks (e.g. MiFi) share the same network as if they are connected behind the same gateway. This is useful to get data from server on another side of the network. With the advent of high speed networks such as Fiber, G.Fast (the next generation of DSL) or the mobile LTE (Long Term Evolution), the streaming over VPN (Virtual Private Network) and high bandwidth transfer using an upstream link is now affordable. For privacy and cost reasons, it is better to keep the private data (such as photos, videos on the private server at home) with a backup, for example, based on RAiDx (Redundant Array of Inexpensive Disks at level x) rather than uploading everything to the cloud. In addition, interconnection of networks is also useful for monitoring and controlling devices from another network, for example, in the context of elderly care and home automation.

A VPN for a full interconnection of two networks should reconcile network addressing from each network edge. The main issue relies on sharing the same network from both edges even if they are configured with the same IP address range, which is often the case on the default configuration of residential gateways. Usually, the full interconnection is based on either dedicated appliances in a professional environment or a specific configuration of advanced gateways for small offices or home offices. It is difficult to implement such configuration on a home network. Even if the residential gateway of a home network can provide this feature, it is not feasible and seamless for ordinary users on home networks.

Current gateways do not provide a simple way to provide interconnection between networks for consumers. Even if it is possible to provide an interconnection, depending on the network configuration on both sides, it may require new DHCP (Dynamic Host Configuration Protocol) leases and IP address changes. This may require service interruption which augments the risk of errors.

The main constraint of a solution for network interconnection can be explained as below. The local IP addressing of each home network should not be changed once the home networks have been inter-connected or when the inter-connection is released. It is not allowed to reassign IP addresses to a device by changing the DHCP leases. This constraint guarantees that no service interruption will occur. The inter-connection of two home networks should not generate IP address conflicts when a new device is connected to one of the home networks.

There may be no (IP) routing from one local network to another. That is to say, MAC layer broadcasting needs to be forwarded from one local network to another in such case.

### SUMMARY OF THE INVENTION

The present disclosure will be described in detail with reference to exemplary embodiments. However, the present disclosure is not limited to the exemplary embodiments.

According to a first aspect of the present disclosure, there is provided a method for controlling the communication between a first network and a second network. The method comprises: creating a data path between the first network and the second network; building a translation table which translates a local legacy address of a device in the first network to a local virtual address of a device in the second network; and transmitting a flow rule created based on the translation table to the Network Address Translation (NAT) function of the created data path between the first network and the second network.

In an embodiment, the data path is created based on the OpenFlow protocol.

In an embodiment, the method further comprises obtaining the local legacy address and the local virtual address by a local legacy address reading the Dynamic Host Configuration Protocol (DHCP) leases files.

In an embodiment, the flow rule comprises replacing a local legacy IP address with a local virtual IP address.

In an embodiment, the data path is created by a Direct IP in IP encapsulation.

In an embodiment, the data path is a virtual gateway connection.

In an embodiment, the data path is a tunnel inside a SDN (Software Defined Networks) control path.

According to a second aspect of the present disclosure, there is provided an apparatus for controlling the communication between a first network and a second network. The apparatus comprises a processor configured to: create a data path between the first network and the second network; build a translation table which translates a local legacy address of a device in the first network to a local virtual address of a device in the second network; and transmit a flow rule created based on the translation table to the Network Address Translation (NAT) function of the created data path between the first network and the second network.

In an embodiment, the apparatus is a Net2Net fabric running above a central Software Defined Networks (SDN) controller.

In an embodiment, the Net2Net fabric is implemented at the side of an Internet Service Provider (ISP) which provides internet service for the first and second home networks.

In an embodiment, the Net2Net fabric is implemented at the side of at least one Customer Premises Equipment (CPE) of the first or second network.

In an embodiment, the function of the Net2Net fabric for building the translation table is implemented at the side of at least one Customer Premises Equipment (CPE) of the first or second network and a the control function of the Net2Net fabric for building the translation table is implemented at the side of an Internet Service Provider (ISP) which provides internet service for the first and second home networks.

According to a third aspect of the present invention disclosure, there is provided a computer program comprising program code instructions executable by a processor for implementing the steps of a method according to the first aspect of the disclosure.

According to a fourth aspect of the present invention disclosure, there is provided a computer program product which is stored on a non-transitory computer readable medium and comprises program code instructions executable by a processor for implementing the steps of a method according to the first aspect of the disclosure.

### BRIEF DESCRIPTION OF THE DRAWINGS

The above and other objects, features, and advantages of the present disclosure will become apparent from the following descriptions on embodiments of the present disclosure with reference to the drawings, in which:
Figure 1 is a block diagram showing an interconnection between two home networks according to an embodiment of the present disclosure;
Figure 2 is a block diagram showing the main components of an OpenFlow switch;
Figure 3 is a flowchart showing the process for an interconnection between a first home network #1 and a second home network #2 with the Net2Net fabric manager according to an embodiment of the present disclosure;
Figure 4 is a diagram showing a data path between the two home networks #1 and #2 which is created by a Direct IP in IP encapsulation according to an embodiment of the present disclosure;
Figure 5 is a diagram showing a virtual gateway connection between the two home networks #1 and #2 according to an embodiment of the present disclosure;
Figure 6 is a diagram showing a data path tunnel inside the SDN control path according to an embodiment of the present disclosure;
Figure 7 is a diagram showing a Net2Net infrastructure for the implementation of the apparatus 100 according to an embodiment of the disclosure;
Figure 8 is a flowchart showing the process for establishing a Net2Net communication between a first home network #1 and a second home network #2;
Figure 9 is a diagram showing a Net2Net infrastructure for the implementation of the apparatus 100 according to another embodiment of the disclosure; and
Figure 10 is a diagram showing a Net2Net infrastructure for the implementation of the apparatus 100 according to another embodiment of the disclosure.

### DETAILED DESCRIPTION OF THE PREFERRED EMBODIMENTS

Hereinafter, the present disclosure is described with reference to embodiments shown in the attached drawings. However, it is to be understood that those descriptions are just provided for illustrative purpose, rather than limiting the present disclosure. Further, in the following, descriptions of known structures and techniques are omitted so as not to unnecessarily obscure the concept of the present disclosure.

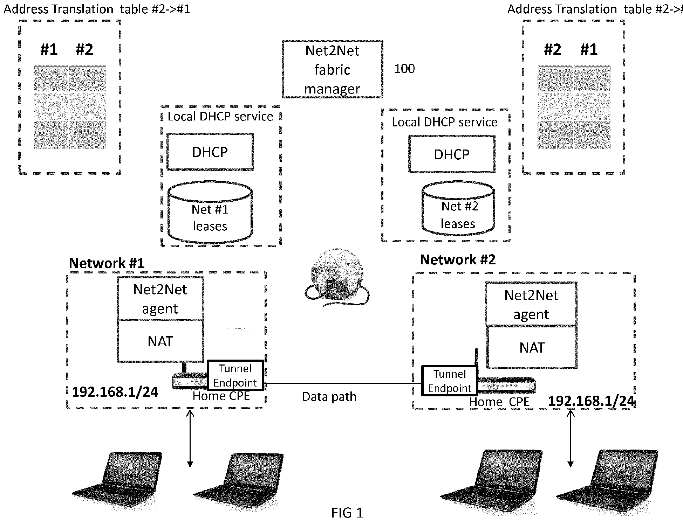

Figure 1 is a block diagram showing an interconnection between two home networks according to an embodiment of the present disclosure.

As shown in Figure 1, an apparatus 100 is provided for managing the interconnection between a first home network #1 and a second home network #2 according to an OpenFlow communications protocol, as an exemplary communications protocol. It is to be appreciated that although home networks #1 and #2 are used for describing the principles of the disclosure, other types of networks such as business networks, public networks, and the like can make use of the disclosed concepts.

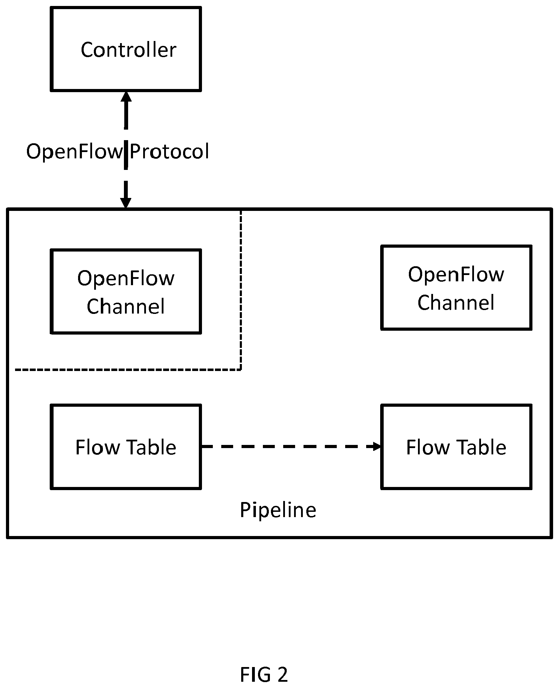

OpenFlow is a communication protocol that gives access to the forwarding plane of a network switch or router over the network. OpenFlow enables controllers to determine the path of network packets through the network of switches. Figure 2 is a block diagram showing the main components of an OpenFlow switch in the OpenFlow Switch Specification, Version 1.4.0 (Wire Protocol 0x05), October 14, 2013. As shown in Figure 2, an OpenFlow switch consists of one or more flow tables, which perform packet lookups and forwarding, and an OpenFlow channel to an external controller. Each flow table in the switch contains a set of flow entries; and each flow entry consists of match fields, counters, and a set of instructions to apply to matching packets. The switch communicates with the controller and the controller manages the switch via the OpenFlow protocol, which defines messages, such as packet-received, send-packet-out, modify-forwarding-table, and get-stats. Using the OpenFlow protocol, when an OpenFlow Switch receives a packet it has never seen before, for which it has no matching flow entries, it sends this packet to the controller. The controller then makes a decision on how to handle this packet. The controller can add, update, and delete flow entries in flow tables, both reactively (in response to packets) and proactively.

Definitions of some terms used in the disclosure will be explained here. A gateway refers to a device or a software that connects a local area network (LAN) to a wide area network (WAN). A (network) switch is a multiport (network) bridge that uses hardware addresses to process and forward data at the data link layer (layer 2) of the OSI model while the (network) router process and forward at network link layer (layer 3). A home gateway is a Consumer Premises Equipment (CPE) that does WAN connection on Consumer Premises Side. On the other side, a Virtual Gateway does the WAN connection on the provider Premises. A home bridge interconnects the home LAN to another part of the user LAN located on the provider premises. It can connect any Network function e.g. DHCP/DNS and also the Virtual gateway function to connect the WAN. We define Home CPE a general Consumer Premise Equipment whatever it is a bridge or gateway. A CPE or gateway can also provide an API to connect to and configure it. Back to Figure 1, the apparatus 100 takes control of each network switch of the home networks #1 and #2 according to the OpenFlow communications protocol, for enabling the transfer from one side to another, and vice versa. An interconnection of the home networks #1 and #2 can aggregate the two home networks #1 and #2 into one. For example, suppose that the home network #1 is in a son's home and the home network #2 is in a dad's home. With the interconnection of the two home networks, the dad's and son's homes and networks can be fully Net2Net connected. The dad and/or the son can access to all resource of the other home network from home remotely. In other examples, a common Layer 2 net to net brings seamless connectivity for UPNP (Universal Plug and Play), DLNA (Digital Living Network Alliance), Samba, and a DLNA server can be accessed from a guest house.

In this sense, the apparatus 100 performs a network function of a Net2Net fabric manager. In an example, the apparatus 100 can be implemented as a Net2Net fabric running above a central SDN (Software Defined Networks) controller. A Net2Net fabric is a SDN app software running above a Network OS (e.g. RYU/OpenDaylight).

As a further example, the Net2Net fabric manager can be implemented at the side of an ISP (Internet Service Provider) which provides internet service for the two home networks #1 and #2. The Net2Net fabric manager can be a central one which is located at the provider premise to establish a secure Net2Net communication between at least two different networks. The Net2Net fabric manager can also delegate the above network function to a local Net2Net agent located on user premises.

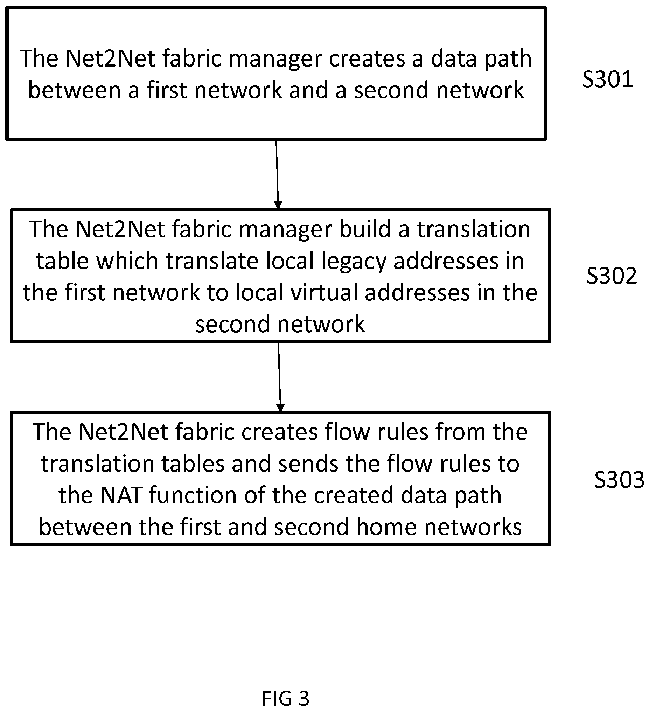

Figure 3 is a flowchart showing the process for an interconnection between a first home network and a second home network (as examples of exemplary networks) with the Net2Net fabric manager according to an embodiment of the present disclosure.

It can be appreciated that, before the interconnection of the two home networks #1 and #2, a step of Net2Net setup may be needed, in which the Net2Net fabric manager can provide a service API (application programming interface) for end users to subscribe to the Net2Net service. Each home network needs be uniquely identified so that each end user can select one or several remote network to connect with. When both users agree respectively to establish the same Net2Net communication, the Net2Net fabric manager goes to the steps for an interconnection between these two home networks.

As shown in Figure 3, at the step S301, for the interconnection of the two home networks #1 and #2, a data path is created between the two home networks. The Net2Net data path is a specific data path tunnel between two tunnel endpoints of the Net2Net communication. The data path can be a direct communication path between home networks (VPN like) or can be connected at provider premises if the residential CPE (Customer Premises Equipment) is a bridge which connects a virtual CPE or gateway on provider side (according to current Network Function Virtualization trends). In that case, The Tunnel endpoints will be located on provider premises (not shown).

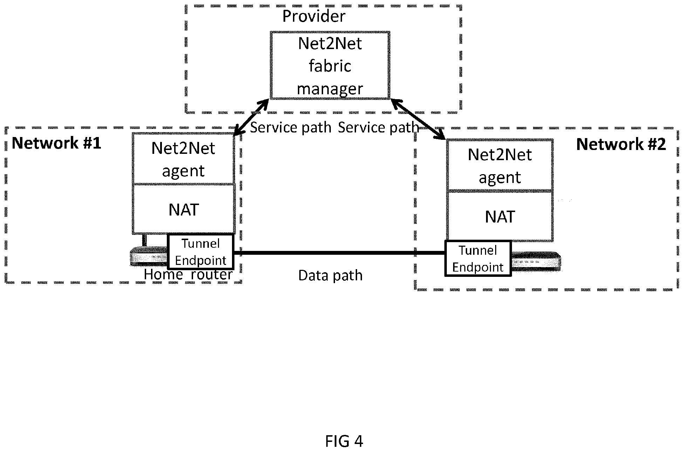

The data path can be created by a Direct IP in IP encapsulation. Figure 4 is a diagram showing a data path between the two home networks #1 and #2 which is created by a Direct IP in IP encapsulation according to an embodiment of the present disclosure.

For the data path shown in Figure 4, the Net2Net fabric manager needs to configure a tunnel endpoint on each network side either by the command line interface of the home CPE or to a specific Net2Net agent running on the home gateway. The tunnel endpoint sends the translated data packets to the remote home by encapsulating it in an IP header using the public IP address of the remote home. The tunnel endpoint receiver simply decapsulates the packet and forwards it to the local network.

This data path shown in Figure 4 has each home gateway listen in on a dedicated port for the tunnel. It also requires that the Net2Net fabric associates the public IP address of the remote home with an address translation table, therefore sends information to connect (such as public address and secure key) to the remote home gateway to establish the particular data path. Secure versions of the above mechanisms, for example a "stunnel" can be used.

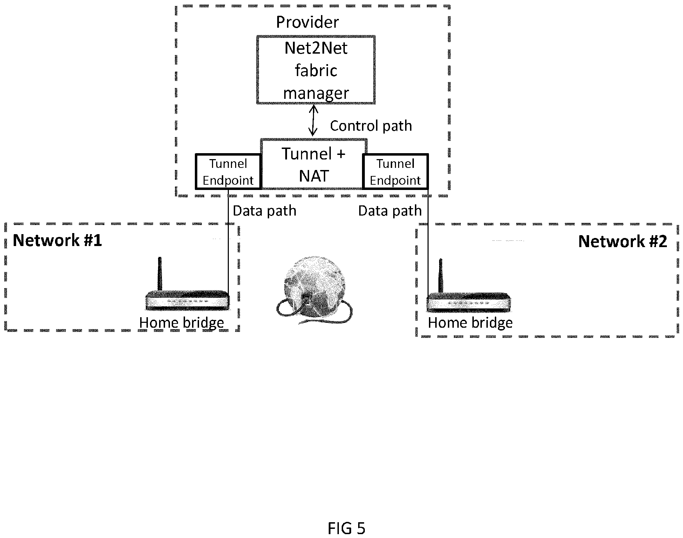

Another example of the data path is a virtual gateway connection. Figure 5 is a diagram showing a virtual gateway connection between the two home networks #1 and #2 according to an embodiment of the present disclosure. As shown in Figure 5, the home network is built from a home CPE that connects a tunnel endpoint on the provider premises where most the network function reside such as DHCP, NAT (Network Address Translation), DNS (Domain Name System) and so on. Therefore, the tunneling is usually performed by configuring one or several switches also located on the provider premises configured to send or receive the traffic from the tunnel endpoints.

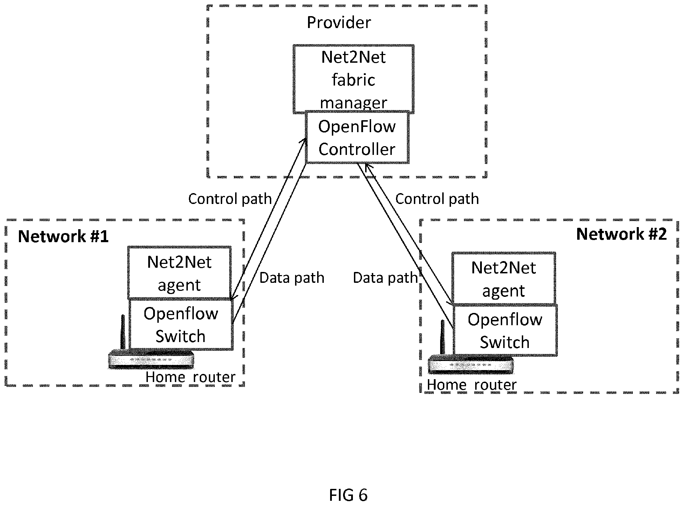

The data path can also be a tunnel inside the SDN control path. Figure 6 is a diagram showing a data path tunnel inside the SDN control path according to an embodiment of the present disclosure. As shown in Figure 6, an OpenFlow enables packet transfers between controllers and switches via the control path. In this case, the use of the control path is diverted to transfer data between home networks as well as using PACKET_OUT or PACKET_IN for raw data if the address targets the remote home network. The controller forwards the received data packets to the remote home network.

As shown in Figure 3, at the step S302, the Net2Net fabric manager builds a translation table which translates local legacy addresses in a first network to local virtual addresses in a second network.

The Net2Net fabric can generate a translation table, which translates local legacy addresses in the first home network #1 to a local virtual address in the second home network #2 for the network switch. Back to Figure 1, the home network #1 can be referred to as a local home network which is comprised of devices physically connected behind a home CPE, each of the device having a local legacy IP address in the space of the home network #1. As shown in Figure 1, the above-mentioned device in the home network 11 can be any of the two laptops in the home network #1. The home network #2 can be referred to as a remote home network which is comprised of devices physically connected behind a home CPE, each of the device having a local virtual IP address in the space of the home network #2. In Figure 1, the above-mentioned device can be any of the two laptops in the home network #2.

In an example, the translation table has two columns and each row of the translation table comprises: a legacy address, which is the IP address of a laptop in the address space of the local home network #1; and a virtual address, which is the IP address of a laptop in the address space of the remote home network #2.

In Figure 1, the Net2Net fabric can build two translation tables for managing the interconnection between the two home networks #1 and #2. One table translates the local legacy IP addresses of home network #1 to local virtual IP addresses of home network #2. The other table translates the local legacy IP addresses of home network #2 to local virtual IP addresses of home network #1.

It can be appreciated that when there are n home networks to be managed, the Net2Net fabric maintains n*(n-1) translation tables. One table is responsible for translating the local legacy IP addresses of one home to local virtual IP addresses of another home. For example, if there are three home networks #1, #2 and #3 under the control of the apparatus 100, 6 translation tables are needed for example as follows: table 1 for home network #1 to home network #2, table 2 for home network #1 to home network #3, table 3 for home network #2 to home network #1, table 4 for home network #2 to home network #3, table 5 for home network #3 to home network #1, and table 6 for home network #3 to home network #2.

As shown in Figure 1, each local DHCP service serves local legacy and virtual IP addresses leases, which can provide an API to allow either the Net2Net manager or the Net2Net agent to get the current DHCP leases to build the translation tables.

Basically, for a given device in a local home network, the Net2Net fabric (or the Net2Net agent) can (a) extract the local legacy IP addresses, for example, from reading the local DHCP leases file or via a DHCP server API, and (b) get the remote DHCP leases and assign a new local virtual address, or requests a new local virtual address on the remote DHCP server. The local virtual address is the IP address of a device in the remote home network in the address space of the remote home network. The Net2Net fabric can populate the translation table with both entries, the local legacy address and create the local virtual address.

The Net2Net fabric can query the current DHCP Leases from the local DHCP server or monitor the local DHCP traffic to capture ongoing DHCP requests. Then, it is connected to the remote DHCP server directly or via a Net2Net agent. The Net2Net fabric is able to obtain the current remote DCHP leases to create the corresponding local virtual addresses entry in the translation tables. In addition, it also needs to be notified of all the subsequent DHCP records (new, delete).

Several methods can be used to create the local virtual addresses. In a first method, an IP address range can be reserved for local virtual IP addresses. This address range cannot be used for local legacy IP addresses. When two home networks interconnect each other, the Net2Net fabric issues a DHCP lease request to the local DHCP server. In a second method, the Net2Net fabric can send a forged DHCP lease request (using the MAC address of the actual device) to the remote home network. The response of the DHCP is used as the local virtual IP addresses. A third method can use a hierarchical DHCP server with the root at provider premises, in which case the Net2Net manager manages a DHCP server so that the DHCP server delegates IP address sub-ranges to the local DHCP servers of each home network.

Renewal and rebinding process will not be discussed in this disclosure. But each local virtual lease expiration, renewing and rebinding should be in consistent with respect to the corresponding remote legacy lease.

At the next step S303, the Net2Net fabric manager creates flow rules from the translation tables and sends the flow rules to the created data path between the first and second home networks. Net2Net fabric computes the translation tables into flow rules and sends the flow rules to the NAT functions belonging to the data path of the two home networks. Specifically, the Net2Net fabric binds the local virtual address to the actual MAC address of the device and updates the network switch in the remote home network accordingly. The Net2Net fabric also creates flow rules that translate the IP addresses for packets going from one home network to another: local legacy IP addresses are replaced with local virtual IP addresses and vice-versa. The flow rules are sent to the NAT function that enforces the flow rules. There are various alternative depending on the architecture in place. The Net2Net fabric can run above a SDN Openflow controller and create applicative NAT rules which are computed by the controller as flow rules and sent to each Openflow Forwarding element running on the home CPE or on a set of switches on the provider premises. Alternatively, A Net2Net agent on the home premises can directly create NAT entries with Linux Netfilter tools (e.g. iptables/ipset).

Next, a process for generating an example of NAT for Net2Net communication with iptable will be described. It can be appreciated that flow rule generation depends on the SW that enforce the rules (Netfilter(iptable/Ipset) Or Openflow), and each software has an API which is able to create NAT rules.

Configuring (add/delete/modify) NAT rules for the Net2Net purpose shall be consistent with the existing NAT rules in place. The following section illustrates how a NAT entry becomes a NAT rule inside a forwarding element (router) with iptables command.

In this example, a device D1 from the home network #1 is willing to connect to the remote home network #2 through an interface named vpn.

On the home network #1, IP addresses of the device D1 are defined as:
IP_localD1 192.168.1.2 : local address in home network #1
IP_virtualD2 192.168.1.102: Virtual address seen from remote home network #2 (from a DHCP request on network #2)
   - forward traffic to remote home network #2: Translate IP address from an IP_localD1 to IP_virtualD2
   - coming traffic from the remote home #2: Translate IP address from an IP_virtualD2 to IP_localD1
iptables -t nat -A POSTROUTING -d 192.168.1.2 -o vpn -j SNAT --to-source 192.168.1.102

### On the home network #2

Address 192.168.1.102 is bridge on the remote GW Having a Mac Learning input(192.168.1.102/vpn)

If a device D2 from the home network #2 is willing to connect remote home network #1 through the same interface named vpn, then
IP_localD2: 192.168.1.2 local address in home network #2
IP_virtualD1: 192.168.1.102 Virtual address seen from the remote home network #1 (from a DHCP request on network #1)
   - forward traffic to remote home network #1: Translate IP address from an IP_localD2 to IP_virtualD1
   - coming traffic from the remote home network #1: Translate IP address from an IP_virtualD1 to IP_localD2
iptables -t nat -A POSTROUTING -d 192.168.1.2 -o vpn -j SNAT --to-source 192.168.1.102
Please note that in the above example the device D1 and D2 is set to have the same local and virtual addresses so that they can interwork without collision.

Several embodiments of the implementation of the apparatus 100 for managing the interconnection between a first home network #1 and a second home network #2 will be described in more details.

### 1. NFV (Network Function Virtualization) with all network functions located at the service provider side.

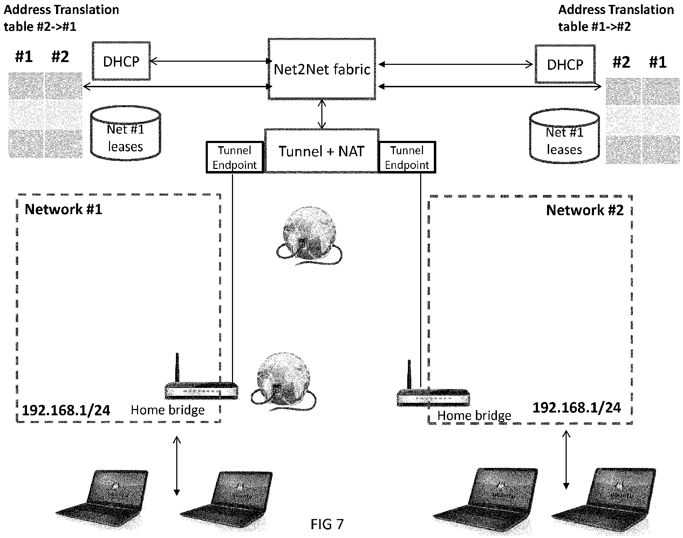

Figure 7 is a diagram showing a Net2Net infrastructure for the implementation of the apparatus 100 according to an embodiment of the disclosure based on virtual gateways where most network functions located on the provider premises. As shown in Figure 7, each home bridge bridges home network traffic to a particular Tunnel endpoint belonging to the Virtual Gateway. In particular, DHCP is a virtual function that serves DHCP leases from the provider side back to the device through the CPE Bridge.

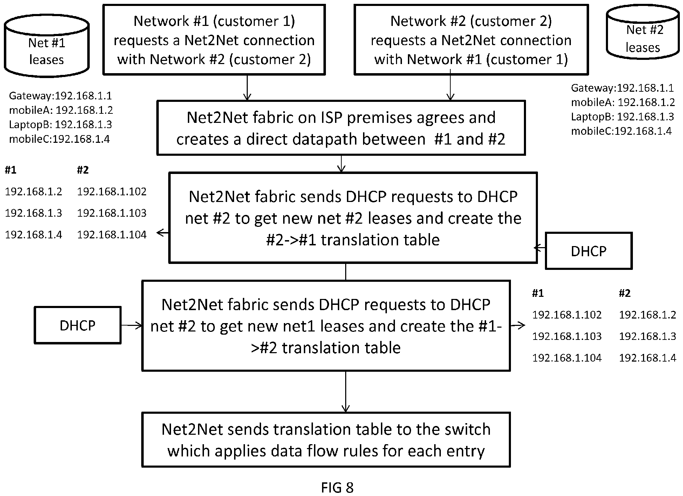

Figure 8 is a flowchart showing the process for establishing a Net2Net communication between a first home network #1 and a second home network #2 with the infrastructure in Figure 7. Firstly, both home networks #1 and #2 can connect their own virtual gateway interfaces to launch the configuration of a Net2Net communication and select the recipient of the remote network to connect. In this case, the network #1 is a customer 1 and the network #2 is a customer 2. The network provider (ISP) instantiates a Net2Net communication when both networks agree respectively to establish the same Net2Net communication. The Net2Net fabric on ISP premises agrees and creates a direct data path between the home networks #1 and #2. The Net2Net fabric can request or monitor particular DHCP lease of any local network. When starting the Net2Net communication, it establishes a tunnel between the two virtual gateways and acts as DHCP client to get virtual address leases for any network. In particular, it sends DHCP requests on behalf of a remote network to obtain a corresponding DHCP lease for each local device address. For example, a mobile A with the address of 192.168.1.2 in the first home network #1 has the address of 192.168.1.102 in second home network #2. Similarly, a laptop B and another mobile B with respective addresses in the home network #1 have respective addresses in the home network #2. An example of a translation table from the home network #1 to the home network #2 is as below:

| #1 | #2 |
|---|---|
| 192.168.1.2 | 192.168.1.102 |
| 192.168.1.3 | 192.168.1.103 |
| 192.168.1.4 | 192.168.1.104 |

Upon completing the building of the translation tables, the Net2Net fabric computes the translation table into flow rules and sends the flow rules to the NAT functions belonging to the data path of the two home networks which enforces the NAT rules. Then, each device from any home network has the visibility to any other device of the remote network since NAT filter rules grant access to remote registered device. Further, any device can start link layer discovery means (e.g. UPNP/DLNA, zeroconf) and get services from "virtual" devices as well as for the local devices. It will be up to the Net2Net fabric to renew or release DHCP leases according to local leases status it monitors on each network side.

### 2. DHCP on CPE side and control from the provider side

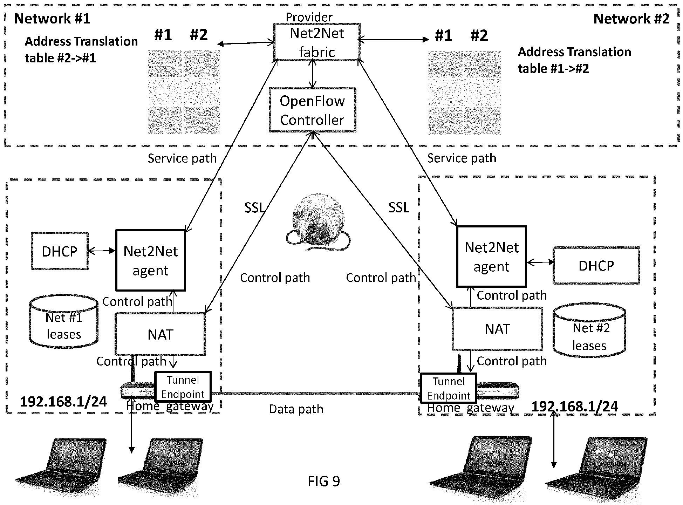

Figure 9 is a diagram showing a Net2Net infrastructure for the implementation of the apparatus 100 according to another embodiment of the disclosure where the DHCP is on CPE side and the control is from the service provider side.

As shown in Figure 9, a Net2Net infrastructure based on customer premises home gateways on which he local DHCP sever runs. The Net2Net communication is requested from each side through the Web interface of the Home gateway or via a local Net2Net agent that sends the request to the Net2Net Fabric. When both side agree, the Net2Net function sends back a request to each home gateway to create a Tunnel endpoint as well as information to connect the remote home gateway to establish the particular data path. The Net2Net Fabric needs to build the translation tables for the interconnection of the home networks #1 and #2. It first requests the local leases from Net2Net agents running on each side. Then, it sends a DHCP request for each local address to the remote Net2Net agent and feeds each translation tables. Finally, the Net2Net fabric computes the translation tables into flow rules and sends these flow rules to the NAT function of the local home router. In an embodiment, Openflow protocol is used to send flow rules from an Openflow controller on the provider side to an Openflow enabled switch that enforces the NAT function.

### 3. A distributed management of translation tables on user premises

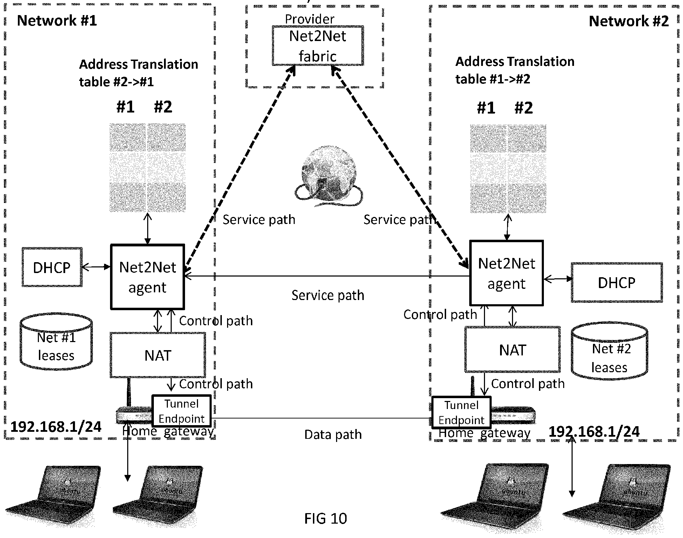

Figure 10 is a diagram showing a Net2Net infrastructure for the implementation of the apparatus 100 according to another embodiment of the disclosure where translation tables are managed on user premises. As shown in Figure 10, the translation tables are computed on customer premises. The Net2Net communication is still requested from each side through the web interface of the home gateway or via a local Net2Net agent that sends the request to the Net2Net Fabric. When both sides agree, the Net2Net function sends back a request to each home gateway to create a Tunnel endpoint and also information to connect the remote home gateway for creating the particular data path and in addition a specific control path to communicate with the remote Net2Net agent. Then, the local Net2Net agent gets DHCP leases from the remote DHCP via the remote Net2Net agent. Next, it sends local DHCP requests for remote device and feeds the local translation table with all the virtual IP addresses of the remote devices. Upon completion, the Net2Net agent computes the translation tables into flow rules and sends these flow rules to the home router NAT. This can be done via OpenFlow or with iptables API.

It is to be understood that the present disclosure may be implemented in various forms of hardware, software, firmware, special purpose processors, or a combination thereof. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

The present disclosure is described above with reference to the embodiments thereof. However, those embodiments are provided just for illustrative purpose, rather than limiting the present disclosure. The scope of the disclosure is defined by the attached claims as well as equivalents thereof. Those skilled in the art can make various alternations and modifications without departing from the scope of the disclosure, which all fall into the scope of the disclosure.

## Claims

1. A method for controlling a communication between a first network and a second network, the first network has a first server for assigning addresses to devices in the first network and the second network has a second server for assigning addresses to devices in the second network, comprising:
creating (S301) a data path between the first network and the second network;
building (S302) a translation table for each of the first network and the second network, wherein the translation table for one network of the first network and the second network is used to translate addresses of the devices in the network to virtual addresses in the other network;
binding, for devices in each one network of the first network and the second network, addresses of the devices in that network and virtual addresses in the other network; and
transmitting (S303) a flow rule, which is created based on the translation table to a first router of the first network and a second router of the second network.

2. The method according to claim 1, wherein the data path is created based on the OpenFlow protocol.

3. The method according to claim 1 or 2, further comprising obtaining the addresses in a network and the virtual addresses in the other network from Dynamic Host Configuration Protocol (DHCP) leases files.

4. The method according to any of claims 1 to 3, wherein the flow rule comprises replacing an address in a network with a corresponding virtual address in the othe rnetwork .

5. The method according to any of claims 1 to 4, wherein the data path is created by a Direct IP in IP encapsulation.

6. The method according to any of claims 1 to 4, wherein the data path is a virtual gateway connection.

7. The method according to claim 2, wherein the data path is a tunnel inside a Software Defined Networks (SDN) control path.

8. An apparatus for controlling a communication between a first network and a second network, the first network has a first server for assigning addresses to devices in the first network and the second network has a second server for assigning addresses to devices in the second network, comprising a processor configured to:
creating a data path between the first network and the second network;
building a translation table for each of the first network and the second network, wherein the translation table for one network of the first network and the second network is used to translate addresses of the devices in the network to virtual addresses in the other network;
binding, for devices in each one network of the first network and the second network, addresses of the devices in that network and virtual addresses in the other network; and
transmitting a flow rule, which is created based on the translation table to a first router of the first network and a second router of the second network.

9. The apparatus according to claim 8, wherein the apparatus is a Net2Net fabric running above a central Software Defined Networks (SDN) controller.

10. The apparatus according to claim 9, wherein the Net2Net fabric is implemented at the side of an Internet Service Provider (ISP) which provides internet service for the first and second home networks.

11. The apparatus of claim 9, wherein the Net2Net fabric is implemented at the side of at least one Customer Premises Equipment (CPE) of the first network or the second network.

12. The apparatus of claim 9, wherein the function of the Net2Net fabric for building the translation table is implemented at the side of at least one Customer Premises Equipment (CPE) of the first network or the second network and the control function of the Net2Net fabric for building the translation table is implemented at the side of an Internet Service Provider (ISP) which provides internet service for the first network and the second network.

13. Computer program comprising program code instructions executable by a processor for implementing the steps of a method according to at least one of claims 1 to 7.

14. Computer program product which is stored on a non-transitory computer readable medium and comprises program code instructions executable by a processor for implementing the steps of a method according to at least one of claims 1 to 7.
